# EUROPEAN PATENT APPLICATION

(11) **EP 1 450 359 A2**
(43) Date of publication of application: **25.08.2004**
(21) Application number: 04250842.4
(22) Date of filing: 17.02.2004
(51) Int. Cl.: G11B 7/24, G11B 7/26

(54) **Information medium**

(30) Priority: 20.02.2003 JP 2003043183
(71) Applicant: Fuji Photo Film Co., Ltd., Kanagawa (JP)
(72) Inventor: Usami, Yoshihisa, Odawara-shi, Kanagawa (JP)
(74) Representative: Stevens, Jason Paul

(57) **Abstract**

The present invention relates to an information medium comprising an undercoat layer (10) and a colorant receiving layer (12) in this order on a substrate, wherein at least a part of the periphery of the undercoat layer (10) is coated with the colorant receiving layer (12). Preferably, at least a part of the outer periphery of the undercoat layer (10) is coated with the colorant receiving layer (12). Preferably, at least a part of the inner periphery of the undercoat layer is coated with the colorant receiving layer.

Preferably, the whole of the outer and inner peripheries of the undercoat layer is coated with the colorant receiving layer.

## Description

### BACKGROUND OF THE INVENTION

### Field of the Invention

The present invention relates to an information medium and in particular to an information medium having a colorant receiving layer.

### Description of the Related Art

As personal computers spread in recent years, image-forming units including ink jet printers are rapidly spreading. Demand for print image qualities and shelf stability is also increasing year by year.

Various kinds of information mediums are also rapidly spreading. For example, a write once type optical information recording medium (optical disk) on which information can be recorded only once with a laser light is called CD-R and well-known. An optical disk which is called a write once type digital versatile disk (DVD-R) (for example, *Nikkei New Media, separate volume,* "DVD", published in 1995) is also put into practical use as an information medium capable of recording with higher-density than CD-R, to attain a position as a high-capacity information medium.

A CD-R type or DVD-R type optical information recording medium provided with a colorant receiving layer in a label surface thereof (surface opposite to the side of the medium irradiated with a laser light at the time of recording or reproduction) is put into practical use.

The user can print photographs, pictures, letters etc. on the label surface (coloring receiving layer) of the optical disk by using an ink jet printer etc. in order to distinguish recorded information.

The print system using an ink jet printer etc. is rapidly spreading in various uses because various figures and color images including information by letters can be formed rapidly, easily and accurately.

However, when an image representing information is formed on the information medium with an inkjet printer etc., the image sometimes shows deeper color in the peripheral portion of the colorant receiving layer. As a result, the unevenness of the image occurs to deteriorate the appearance.

Various attempts to solve this problem by examining e.g. the material of the colorant receiving layer have been made (see for example Japanese Patent Application Laid-Open (JP-A) No. 2002-133722), however there attempts arises a problem with safety and handling of the material, and the unevenness of the image cannot be sufficiently suppressed.

### SUMMARY OF THE INVENTION

In view of the problems in the prior art described above, the present invention was made in order to achieve the following objects. That is, an object of the invention is to provide an information medium free of the unevenness of an image by preventing partial deepening of color in the edge of a colorant receiving layer upon formation of an image.

The present inventor made extensive study to solve the problem described above, and they examined a cause for partial deepening of color in the periphery of a colorant receiving layer upon formation of an image, and as a result they found that an ink received by a peripheral area is retained in that area without substantial diffusion, to cause the above phenomenon. On the basis of this examination, the present inventor arrived at the invention. That is, the invention relates to an information medium comprising an undercoat layer and a colorant receiving layer in this order on a substrate, wherein at least a part of the periphery of the undercoat layer is covered with the colorant receiving layer.

Preferably, at least a part of the outer periphery or at least a part of the inner periphery of the undercoat layer is covered with the colorant receiving layer.

Preferably, the whole of the peripheries (outer and inner peripheries) of the undercoat layer is covered with the colorant receiving layer. Preferably, the colorant receiving layer comprises fine particles.

Preferably, at least a part of an image formed on the colorant receiving layer is formed on the colorant receiving layer not having the undercoat layer formed thereunder.

### BRIEF DESCRIPTION OF THE DRAWINGS

Fig. 1 A is a top view illustrating the information medium of the present invention.
Fig. 1B is a sectional view along A-A illustrating the information medium of the present invention.
Fig. 2A is a top view illustrating the information medium of the invention.
Fig. 2B is a sectional view along B-B illustrating the information medium of the invention.

### DETAILED DESCRIPTION OF THE INVENTION

The information medium of the present invention comprises an undercoat layer and a colorant receiving layer in this order on a substrate, wherein at least a part of the periphery of the undercoat layer is covered with the colorant receiving layer.

By covering at least a part of the periphery of the undercoat layer with the colorant receiving layer, an ink supplied from an ink jet printer etc. spreads into the covering region, and thus the ink is not retained in the periphery. As a result, the phenomenon in which an image has deeper color in the periphery can be prevented.

An embodiment of the invention is an information medium (P) comprising an undercoat layer and a colorant receiving layer in this order on a substrate, wherein at least a part of the periphery of the undercoat layer is coated with the colorant receiving layer.

Another embodiment of the invention is an information medium (Q) comprising an undercoat layer and a colorant receiving layer in this order on a substrate, wherein at least a part of the outer periphery of the undercoat layer is coated with the colorant receiving layer.

Another embodiment of the invention is an information medium (R) comprising an undercoat layer and a colorant receiving layer in this order on a substrate, wherein at least a part of the inner periphery of the undercoat layer is coated with the colorant receiving layer.

Another embodiment of the invention is an information medium (S) comprising an undercoat layer and a colorant receiving layer in this order on a substrate, wherein the entire periphery of the undercoat layer is coated with the colorant receiving layer.

Another embodiment of the invention is the information medium (P), wherein the colorant receiving layer comprises fine particles.

Another embodiment of the invention is the information medium (Q), wherein the colorant receiving layer comprises fine particles.

Another embodiment of the invention is the information medium (R), wherein the colorant receiving layer comprises fine particles.

Another embodiment of the invention is the information medium (S), wherein the colorant receiving layer comprises fine particles.

Another embodiment of the invention is the information medium (P), wherein at least a part of an image formed on the colorant receiving layer is formed on the colorant receiving layer not having the undercoat layer formed thereunder.

Another embodiment of the invention is the information medium (Q), wherein at least a part of an image formed on the colorant receiving layer is formed on the colorant receiving layer not having the undercoat layer formed thereunder.

Another embodiment of the invention is the information medium (R), wherein at least a part of an image formed on the colorant receiving layer is formed on the colorant receiving layer not having the undercoat layer formed thereunder.

Another embodiment of the invention is the information medium (S), wherein at least a part of an image formed on the colorant receiving layer is formed on the colorant receiving layer not having the undercoat layer formed thereunder.

Another embodiment of the invention is the information medium (P), wherein the maximum distance between the undercoat layer and a periphery of the colorant receiving layer is at least 0.1 mm.

Another embodiment of the invention is the information medium (Q), wherein the maximum distance between the undercoat layer and a periphery of the colorant receiving layer is at least 0.1 mm.

Another embodiment of the invention is the information medium (R), wherein the maximum distance between the undercoat layer and a periphery of the colorant receiving layer is at least 0.1 mm.

Another embodiment of the invention is the information medium (S), wherein the maximum distance between the undercoat layer and a periphery of the colorant receiving layer is at least 0.1 mm.

Another embodiment of the invention is the information medium (P), wherein a recording layer or a protective layer is formed between the colorant receiving layer and the undercoat layer.

Another embodiment of the invention is the information medium (Q), wherein a recording layer or a protective layer is formed between the colorant receiving layer and the undercoat layer.

Another embodiment of the invention is the information medium (R), wherein a recording layer or a protective layer is formed between the colorant receiving layer and the undercoat layer.

Another embodiment of the invention is the information medium (S), wherein a recording layer or a protective layer is formed between the colorant receiving layer and the undercoat layer.

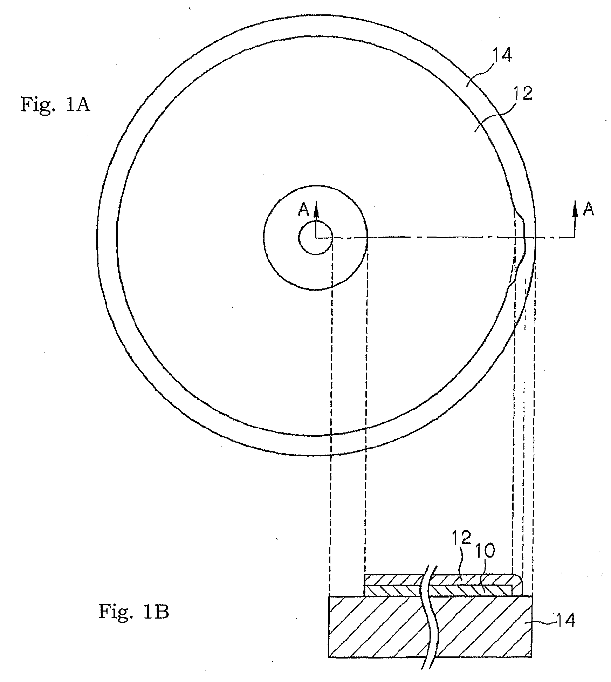

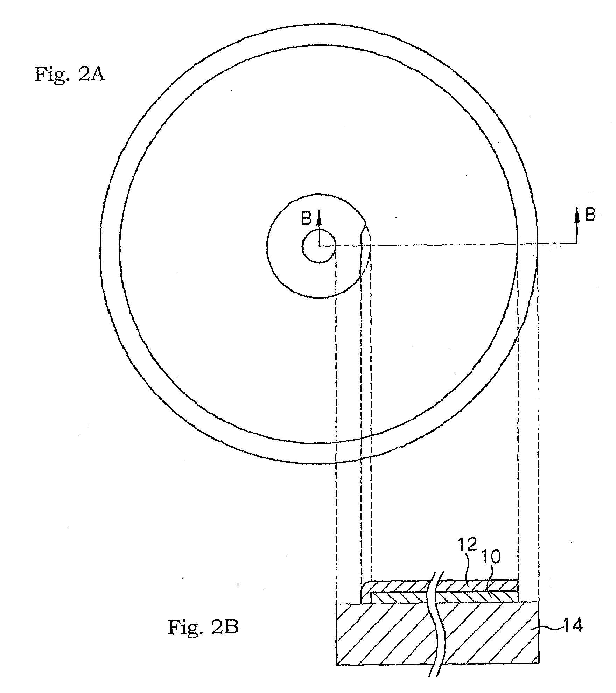

As shown in Fig. 1A and Fig. 1B, a colorant receiving layer 12 is formed on an undercoat layer 10 formed on the surface of an information medium 14, and at least a part of the outer periphery of the undercoat layer 10 may be covered with the colorant receiving layer 12, and as shown in Figs. 2A and Fig. 2B, at least a part of the inner periphery of the undercoat layer 10 may be covered with the colorant receiving layer with the colorant receiving layer 12.

By covering at least a part of the outer periphery, the undercoat layer can be prevented from being released. By covering at least a part of the inner periphery, the undercoat layer can be prevented from being released.

At least a part of the outer or inner periphery refers to at least 1 / 20 (preferably at least 1 / 5, more preferably at least 1 / 2) of the outer or inner periphery. Such peripheral portion may be arranged continuously or intermittently.

In consideration of practical usability, it is preferable that the whole outer or inner periphery is covered with the colorant receiving layer.

For effectively utilizing the two advantages described above, it is preferable that both the inner and outer peripheries of the undercoat layer are covered with the colorant receiving layer.

The undercoat layer can be formed from various materials by a known method in accordance with the use. The thickness of the undercoat layer is preferably 0.1 to 300 µm, more preferably 2 to 100 µm, still more preferably 5 to 50 µm.

For example, an undercoat layer having low transparency (transmittance: 10% or less) exhibits ink diffusibility similar to that of paper, thus improving image qualities. In this case, the undercoat layer preferably employs a material such as radiation-curable resin containing a light absorbing material.

A white undercoat layer can be used to improve color reproduction. In this case, the undercoat layer preferably comprises a material such as a milky dye-containing radiation-curable resin, heat-curable resin or hot-melt resin. The "radiation" refers to electromagnetic waves such as ultraviolet rays, electron beams, X rays, y rays and infrared rays, among which ultraviolet rays and electron beams are preferable.

An undercoat layer having high glossiness can be used in gloss photo finish, while a matting undercoat layer can be used in matte photo finish.

A non-white undercoat layer of various colors can be used to form various kinds of images. For example, a fluorescent undercoat layer can be used to form fluorescent images.

The method of forming the undercoat layer is not particularly limited, however it is preferable from the viewpoint of productivity that the undercoat layer is formed by screen-printing of the radiation-curable resin described above or the like.

The distance from inner periphery of the undercoat layer to the center of the substrate is preferably 20 mm or less, more preferably 15 mm or less, still more preferably 12.5 mm or less. However, it is not preferable that the undercoat layer is formed in an area too close to the center of the substrate. Accordingly, the diameter of inner periphery of the undercoat layer is preferably 10 mm or more, more preferably 18 mm or more, still more preferably 20 mm or more.

The diameter of the outer periphery of the undercoat layer is preferably 110 mm or more, more preferably 115 mm or more, still more preferably 117 mm or more. However, it is not preferable that the undercoat layer is formed in an area too close to the outer periphery of the substrate. Accordingly, the diameter of the outer periphery of the undercoat layer is preferably 119.5 mm or less, more preferably 119 mm or less, still more preferably 118.5 mm or less.

A recording layer, a protective layer etc. may be formed between the undercoat layer and the substrate.

The colorant receiving layer is formed on the undercoat layer in such a manner that at least a part of the periphery of the undercoat layer is covered with the colorant receiving layer as described above. That is, at least a part of the periphery of the colorant receiving layer with which at least a part of the periphery of the undercoat layer was covered, is brought into contact with a layer (for example a protective layer) on which the undercoat layer was formed.

The maximum distance from the undercoat layer to a point in the area in which the colorant receiving layer contacts with the layer beneath the undercoat layer is preferably 0.1 mm or more, more preferably 0.5 mm or more, still more preferably 1 mm or more. When the distance is 0.1 mm or more, the ink-receiving capacity of the colorant receiving layer in the area in which the colorant receiving layer contacts with the layer beneath the undercoat layer is increased, thus sufficiently preventing the deepening of the color in the peripheral area.

When such maximum distance is increased, a large portion of the colorant receiving resin protrudes from the undercoat layer, thus deteriorating the appearance. Accordingly, the distance is preferably 10 mm or less, more preferably 5 mm or less, still more preferably 3 mm or less, to achieve an excellent appearance.

As described above, by covering at least a part of the periphery of the undercoat layer with the colorant receiving layer, an image can be formed on the covering region.

For covering desired places of the periphery of the undercoat layer with the colorant receiving layer, the undercoat layer is first formed and then, by utilizing masks or the like, only the desired places are covered with the layer. In the case where the whole periphery is to be covered with the colorant receiving layer, the mask is dispensable.

In ink jet recording, it is necessary for the colorant receiving layer to have a capacity enough to absorb all droplets, and thus its thickness should be determined in connection with the porosity of the layer. For example, when the amount of ink is 8 nL/mm² and the porosity is 60%, the layer should have a thickness of at least 10 µm.

From this viewpoint, the thickness of the colorant receiving layer in ink jet recording is preferably 10 to 100 µm, more preferably 15 to 80 µm, further preferably 20 to 50 µm.

The materials of the colorant receiving layer and the method of forming the layer are not particularly limited.

For example, a binder and a viscosity modifier are added to a radiation-curable resin, and the resin is printed by screen printing or spin coating in the same manner as that in the case of the undercoat layer and then cured with radiations, whereby the colorant receiving layer can be formed.

The radiation-curable resin is preferably a hydrophilic radiation-curable resin, and examples thereof include polyethylene oxide, polyvinyl alcohol, polyvinyl methyl ether, polyvinyl formal, carboxyvinyl polymer, hydroxyethyl cellulose, hydroxypropyl cellulose, methyl cellulose, sodium carboxymethylcellulose, polyvinyl pyrrolidone, morpholine, ketone formaldehyde, a styrene/maleic anhydride polycondensate, shellac, dextrin, poly(pyrrolidonylethyl acrylate), polyacrylic acid and metal salts thereof, polyamine, polyacrylamide, polyethylene glycol, polydiethylaminoethyl (meth)acrylate, polyhydroxy styrene, polyvinyl alkyl ether, polyvinyl hydroxy benzoate, polyphthalic acid, acetate cellulose hydroxydiene phthalate.

Materials and forming methods described in JP-A No. 2002-307806 may also be used. Hereinafter, the materials and methods for forming the colorant receiving layer described in the above publication are described.

The colorant receiving layer preferably comprises at least a compound represented by the following general formula (1) and/or a compound represented by the following general formula (2) , fine particles, polyvinyl alcohol, a boron compound and a mordant, and may further comprise various additives.

### (Compounds represented by the general formulae (1) and (2))

The compounds represented by the following general formulae (1) and (2) are high-boiling solvents.

RO(CH₂CH₂O)ₙH (1)

wherein R represents a C₁ to C₁₂ saturated hydrocarbon group, a C₁ to C₁₂ unsaturated hydrocarbon group, a phenyl group or an acyl group, and n is an integer of 1 to 3.

RO(CH₂CH(CH₃)O)ₙH (2)

wherein R represents a C₁ to C₁₂ saturated hydrocarbon group, a C₁ to C₁₂ unsaturated hydrocarbon group, a phenyl group or an acyl group, and n is an integer of 1 to 3.

In the general formulae (1) and (2), R represents a C₁ to C₁₂ saturated hydrocarbon group, a C₁ to C₁₂ unsaturated hydrocarbon group, a phenyl group or an acyl group, preferably a C₁ to C₄ saturated hydrocarbon group. The number of carbon atoms in the saturated hydrocarbon group is 1 to 12, preferably 1 to 8, more preferably 1 to 4. The saturated hydrocarbon group includes an alkyl group, an alicyclic hydrocarbon group etc. The saturated hydrocarbon group may be substituted with a substituent group. Specifically, the saturated hydrocarbon group is a methyl group, ethyl group, propyl group, butyl group or hexyl group, preferably a methyl group, ethyl group, propyl group or butyl group.

The number of carbon atoms in the unsaturated hydrocarbon group is 1 to 12, preferably 1 to 8, more preferably 1 to 4. The unsaturated hydrocarbon group includes an alkenyl group, an alkynyl group etc. The unsaturated hydrocarbon group may be substituted with a substituent group. Specifically, the unsaturated hydrocarbon group may be a vinyl group, allyl group, ethynyl group, 1,3-butadienyl group and 2-propinyl group, preferably an allyl group.

The acyl group is preferably a C₁ to C₈ acyl group, more preferably a C₁ to C₄ acyl group. The acyl group may be substituted with a substituent group. Specifically, the acryl group includes an acetyl group, propionyl group, butyryl group and valeryl group, preferably a butyryl group.

In the general formulae (1) and (2), n is an integer of 1 to 3, preferably 2 or 3. The compounds represented by the general formulae (1) and (2) are preferably water-soluble compounds. The "water-soluble" compounds used herein refer to compounds that can dissolve in water in an amount of at least 1% by mass. Examples of the compounds represented by the general formulae (1) and (2) include ethyleneglycol monomethyl ether, ethyleneglycol monoethyl ether, ethyleneglycol monobutyl ether, ethyleneglycol monohexyl ether, ethyleneglycol monoallyl ether, ethyleneglycol monophenyl ether, diethyleneglycol monomethyl ether, diethyleneglycol monoethyl ether, diethyleneglycol monobutyl ether, diethyleneglycol monohexyl ether, diethyleneglycol monododecyl ether, triethyleneglycol monomethyl ether, triethyleneglycol monoethyl ether, triethyleneglycol monobutyl ether, propyleneglycol monomethyl ether, propyleneglycol monoethyl ether and propyleneglycol monobutyl ether. Among them, diethyleneglycol monobutyl ether and triethyleneglycol monobutyl ether are preferable.

The colorant receiving layer may contain at least one of the compounds represented by the general formulae (1) and (2). Accordingly, the layer may contain one or more compounds represented by the general formula (1), or may contain one or more compounds represented by the general formula (2), or may contain both the compound(s) represented by the general formulae (1) and the compound(s) represented by the general formulae (2). When the compound [x] represented by the general formulae (1) and the compound [y] represented by the general formula (2) are simultaneously used, the mixing ratio (mass ratio of x:y) is not particularly limited, but is preferably 100: 1 to 100:100, more preferably 100:10 to 100:50. The total content of the compounds represented by the general formulae (1) and (2) in the colorant receiving layer is preferably 0.1 to 5.0 g/m², more preferably 0.2 to 3.0 g/m².

In the colorant receiving layer in the invention, it is possible to simultaneously use (an) additive(s) such as a wide variety of known surfactants for the purpose of improving coating suitability or surface qualities, known surfactants having ion conductivity for the purpose of suppressing surface frictional electrification and peeling electrification, antioxidants and radiation absorbers for the purpose of improving light-fading resistance, and sulfur-containing compounds for the purpose of improving ozone-fading resistance, in such a range that the effect of the invention is not deteriorated.

### (Fine particles)

As described above, the colorant receiving layer in the invention preferably contains fine particles. As the fine particles, fine particles of an organic colorant and fine particles of an inorganic colorant can be used, among which the fine particles of an inorganic colorant are used preferably in consideration of handling and the like.

Examples of the fine particles of an inorganic colorant include gas phase process silica, alumina, fine particles of hydrous silica, colloidal silica, titanium dioxide, barium sulfate, calcium silicate, zeolite, kaolinite, halloysite, mica, talc, calcium carbonate, magnesium carbonate, calcium sulfate, boehmite, pseudo-boehmite.. Preferably, at least one of these materials is used. Among these compounds, gas phase process silica, alumina and pseudo-boehmite are preferable, and gas phase process silica is more preferable.

In the following, alumina, pseudo-boehmite and gas phase process silica as fine particles of inorganic colorants are described.

### -Pseudo-boehmite-

Pseudo-boehmite is represented by Al₂O₃·xH₂O (1 < x < 2), and its crystal is generally a laminar compound whose (020) face forms a gigantic plane, and its lattice constant d is 0.67 nm. Pseudo-boehmite has a structure containing excessive water between (020) faces. Pseudo-boehmite can efficiently absorb and fix an ink, thus improving ink absorptivity and preventing smearing with time.

Pseudo-boehmite in a sol form (pseudo-boehmite sol) is preferably used as a starting material because a smooth layer can be easily obtained.

### -Aluminum oxide-

The aluminum oxide in the invention can be, for example, anhydrous alumina such as α-alumina, δ-alumina, θ-alumina and χ-alumina and activated aluminum oxide. Among these, δ-alumina is preferable as fine particle of alumina and from the viewpoint of the production process, fine particles of alumina produced by a gas phase process, that is, fine particles of gas phase process alumina obtained by hydrolysis of a gaseous metal chloride in the presence of water generated in oxyhydrogen reaction at a temperature characteristic of that reaction, are preferable because of a larger specific area.

### -Gas phase process silica-

Generally, the silica fine particles are classified roughly into wet process particles and dry process (gas phase process) particles, based on the production process. As the wet process, a process in which silicates are decomposed with an acid to form activated silica which is then suitably polymerized, aggregated and precipitated to give hydrous silica, is mainly used. As the gas phase process, a process involving hydrolysis of silicon halides in a gas phase at a high temperature (flame hydrolysis process) or a process involving heating, reducing and gasifying borax and coke by an arc in an electric oven and oxidizing the resulting gas with air (arc process) is mainly used. The "gas phase process silica" refers to anhydrous silica fine particles obtained by the gas phase process.

The gas phase process silica is different from the hydrous silica in the density of silanol groups on the surface, in the presence of pores, and the like to show different properties, and is suitable for formation of a 3-dimensional structure with high porosity. The reason for the difference is not evident, but is possibly that the hydrous silica has a density of silanol groups as high as 5 to 8 silanol groups/nm² on the surface of the fine particles, and thus the silica fine particles are easily densely aggregated, while the gas phase process silica has a density of silanol groups as low as 2 to 3 silanol groups/nm² on the surface of the fine particles, and is thus sparsely flocculated to form a structure with high porosity.

The gas phase process silica has a particularly large specific surface area, and is thus characterized by high ink absorptivity, high retention efficiency and low refractive index, thus imparting the receiving layer with transparency upon being dispersed to a suitable particle diameter and attaining high color density and excellent color property. The fact that the receiving layer is transparent is important for attaining high color density and excellent coloring gloss not only for use in which high transparency is required such as OHP, but also for use in recording sheets such as photo gloss paper.

The average primary particle diameter of the gas phase process silica is preferably 30 nm or less, more preferably 20 nm or less, still more preferably 10 nm or less, most preferably 3 to 10 nm. Particles of the gas phase process silica easily adhere to one another via hydrogen bonds between silanol groups so that when the average primary particle diameter is 30 nm or less, the gas phase process silica can form a structure of high porosity to improve ink adsorptivity effectively.

When fine particles of another inorganic colorant are used in combination with the gas phase process silica, the content of the gas phase process silica is preferably 50% by mass or more, more preferably 70% by mass or more, based on the total amount of the fine particles of the inorganic colorants.

### (Polyvinyl alcohol)

The colorant receiving layer preferably contains polyvinyl alcohol, which is a water-soluble resin. Examples of the polyvinyl alcohol include not only polyvinyl alcohol (PVA) but also cation-modified polyvinyl alcohol, anion-modified polyvinyl alcohol, silanol-modified polyvinyl alcohol, and other polyvinyl alcohol derivatives. It is possible to use one kind of polyvinyl alcohol or two or more kinds of polyvinyl alcohols.

The PVA has a hydroxyl group in the structural unit thereof, and this hydroxyl group forms a hydrogen bond with a silanol group on the surface of the silica fine particle, thus facilitating formation of a three-dimensional network comprising secondary silica fine particles as chain units. It is considered that the colorant receiving layer having a porous structure with high porosity can be formed by formation of the three-dimensional network. In ink jet recording, the porous colorant receiving layer obtained in the manner as described above can absorb an ink rapidly by the capillary phenomenon to form dots excellent in circularity without ink smearing.

If the content of the polyvinyl alcohol is too low, the strength of the layer is reduced and cracking occurs upon drying, while if the content is too high, pores in the layer are easily clogged with resin to reduce porosity thereby deteriorating ink absorptivity. From the viewpoint of preventing these disadvantages, the content of the polyvinyl alcohol is preferably 9 to 40% by mass, more preferably 12 to 33% by mass, based on the total solids content of the colorant receiving layer.

From the viewpoint of transparency, the polyvinyl alcohol is more preferably PVA having a saponification degree of 70 to 99%, still more preferably PVA having a saponification degree of 80 to 99%.

The polyvinyl alcohol may be used in combination with other water-soluble resins such as polyvinyl acetal, cellulose resins (such as methyl cellulose [MC], ethyl cellulose [EC], hydroxyethyl cellulose [HEC], carboxymethyl cellulose [CMC]), chitins, chitosans, starch; ether linkage-containing resins such as polyethylene oxide (PEO), polypropylene oxide (PPO), polyethylene glycol (PEG) and polyvinyl ether (PVE); amide group- or amide linkage-containing resins such as polyacrylamide (PAAM) and polyvinylpyrrolidone (PVP); and resins containing a carboxyl group as a dissociative group, such as polyacrylates, maleic resins, alginates and gelatins. When the polyvinyl alcohol and another water-soluble resin are simultaneously used, the content of the polyvinyl alcohol is preferably 50% by mass or higher, more preferably 70% by mass or higher, based on the total content of the water-soluble resins.

### -Ratio of the gas phase process silica to the polyvinyl alcohol-

The content ratio (PB ratio [i:p], that is, the mass of the gas phase process silica based on 1 part by mass of the polyvinyl alcohol) of the gas phase process silica (i) (or the total inorganic colorant fine particles when used in combination with other inorganic colorant fine particles) to the polyvinyl alcohol (p) (or the total water-soluble resins when used in combination with another water-soluble resin) affects a significant influence on the structure of the colorant receiving layer. That is, when the PB ratio is increased, the porosity, void volume and surface area (per unit area) are increased. If the PB ratio (i:p) is too high, the strength of the coating is deteriorated, and cracking occurs, while if the PB ratio is too low, the pores are easily clogged with resin to reduce porosity thereby reducing ink absorptivity. From the viewpoint of preventing these problems, the PB ratio is preferably 1.5:1 1 to 10:1.

When the colorant receiving layer is passed through a transfer system in an ink jet printer and the like, it is necessary for the colorant receiving layer to have sufficient strength. The strength of the colorant receiving layer is necessary also from the view point of preventing cracking and removal of the colorant receiving layer. In this case, the PB ratio is preferably 5:1 or lower, and from the viewpoint of securing high-speed ink absorptivity in an ink jet printer and the like, the PB ratio is preferably 2:1 or higher.

For example, when a coating solution in which the fine particles of anhydrous silica having an average primary particle diameter of 20 nm or less and the water-soluble resin were completely dispersed in a PB ratio of 2:1 to 5:1 in an aqueous solution, is applied onto a substrate and the coating layer is dried, a three-dimensional network having secondary particles of the silica fine particles as chain units can be formed to facilitate formation of a light-permeable porous layer having an average pore diameter of 30 nm or less, a porosity of 50 to 80%, a void volume of at least 0.5 ml/g and a specific surface area of at least 100 m²/g.

### (Boron compound)

The colorant receiving layer, that is, a coating layer (porous layer) containing the inorganic colorant fine particles and the water-soluble resin, further contains a boron compound as a crosslinking agent capable of crosslinking the polyvinyl alcohol, and is cured by crosslinking reaction between the boron compound and the polyvinyl alcohol.

The boron compound is applied preferably while a coating solution for forming the porous colorant receiving layer (colorant receiving layer coating solution) is applied or before a coating formed by applying the colorant receiving layer coating shows a falling rate of drying. By this procedure, cracking during drying of the coating can be effectively prevented. That is, while the coating solution is applied or before the coating layer shows a falling rate of drying, the boron compound solution (crosslinking agent solution) permeates into the coating solution, to react rapidly with the polyvinyl alcohol in the coating thereby allowing the polyvinyl alcohol to gel (cure) and instantaneously and significantly improving the strength of the coating.

In the invention, it is also preferable to use a method in which a coating solution prepared by adding a solution (first solution) containing the polyvinyl alcohol and the compound represented by the general formula (1) and/or the compound represented by the general formula (2) to an aqueous dispersion containing the gas phase process silica and a dispersant and then re-dispersing the mixture, is applied onto the surface of a substrate, and while the coating solution is applied or before a drying coating formed by application shows a falling rate of drying, a solution (second solution) containing a mordant is applied onto the coating to form a colorant receiving layer. When this method is used, the boron compound is added preferably to both the first solution to be added to the coating solution and the second solution to be applied subsequently.

The boron compound used as a crosslinking agent can rapidly crosslink the polyvinyl alcohol. Examples of the boron compound include borax, boric acid, borate (for example, orthoborate, InBO₃, ScBO₃, YBO₃, LaBO₃, Mg₃(BO₃)₂, CO₃(BO₃)₂, diborate (such as Mg₂B₂O₅ and Co₂B₂O₅), metaborate (such as LiBO₂, Ca(BO₂)₃, NaBO₂, and KBO₂), tetraborate (such as Na₂B₄O₇·10H₂O), pentaborate (such as KB₅O₈·4H₂O, Ca₂B₆O₁₁·7H₂O, and CsB₅O₅) ).

Compounds other then boron such as glyoxal, melamine formamide (for example, methylol melamine, alkylated methylol melamine), methylol urea, resol resin, polyisocyanate, epoxy resin can also be used. Among these, borax, boric acid and borate are preferable for rapider crosslinking reaction thereof, and boric acid is most preferable.

When gelatin is used in combination with the polyvinyl alcohol, a compound known as a gelatin hardener can be used as a crosslinking agent in combination with the boron compound. Examples of such compounds include aldehyde compounds such as formaldehyde, glyoxal and glutaraldehyde; ketone compounds such as diacetyl and cyclopentane dione; active halogenated compounds such as bis(2-chloroethyl urea)-2-hydroxy-4,6-dichloro-1,3,5-triazine and sodium 2,4-dichloro-6-S-triazine; activated vinyl compounds such as divinylsulfonic acid, 1,3-vinylsulfonyl-2-propanol, N,N'-ethylenebis(vinylsulfonylacetamide) and 1,3,5-triacryloyl-hexahydro-S-triazine; N-methylol compounds such as dimethylol urea and methylol dimethyl hydantoin; isocyanate compounds such as 1,6-hexamethylene diisocyanate; aziridine compounds described in USP Nos. 3017280 and 2983611; carboxyimide compounds described in USP No. 3100704; epoxy compounds such as glycerol triglycidyl ether; ethylene imino compounds such as 1,6-hexamethylene-N,N'-bisethylene urea; halogenated carboxyaldehyde compounds such as mucochloric acid and mucophenoxychloric acid; dioxane compounds such as 2,3-dihydroxydioxane; and chrome alum, potassium alum, zirconium sulfate and chrome acetate. In this case, when the boron compound is used in combination with another crosslinking agent, the content of the boron compound is preferably 50% by mass or more, more preferably 70% by mass or more, based on the total content of the crosslinking agents. Single kind of or plural kinds of the boron compound(s) described above can be used.

When the boron compound is applied, its solution is prepared by dissolving the boron compound in water and/or an organic solvent. The concentration of the boron compound in the boron compound solution is preferably 0.05 to 10% by mass, more preferably 0.1 to 7% by mass, based on the mass of the boron compound solution. As the solvent for the boron compound solution, water is generally used, but an aqueous mixed solvent containing an organic solvent compatible with water may also be used. The organic solvent may be an arbitrary one in which the boron compound can be dissolved, and examples thereof include alcohols such as methanol, ethanol, isopropyl alcohol and glycerin; ketones such as acetone and methyl ethyl ketone; esters such as methyl acetate and ethyl acetate; aromatic solvents such as toluene; ethers such as tetrahydrofuran; and halogenated hydrocarbon solvents such as dichloromethane.

### (Mordant)

In the invention, the colorant receiving layer preferably contains a mordant for further improving the water resistance of a formed image and preventing the image from smearing with time. The mordant is preferably a cationic polymer (cationic mordant), and the mordant is contained in the colorant receiving layer, to interact with a liquid ink comprising an anionic dye as a colorant thereby stabilizing the colorant, improving water resistance and preventing smearing with time.

However, when the mordant is added directly to the coating solution for the colorant receiving layer, the mordant may form aggregates with the gas phase process silica having anionic charge, but when the mordant is separately prepared as another solution and applied, precipitation of the fine particles of the inorganic colorant is prevented. In the invention, therefore, the mordant is contained preferably in a solution (for example, the crosslinking agent solution) other than that comprising the gas phase process silica.

As the cationic mordant, a polymer mordant having a primary to tertiary amino group or a quaternary ammonium base as a cationic group is preferably used, however a cationic non-polymer mordant can also be used. The polymer mordant is preferably a homopolymer of a monomer (mordant monomer) having a primary to tertiary amino group, a homopolymer of a monomer (mordant monomer) having a salt of primary to tertiary amino group, a homopolymer of a monomer (mordant monomer) having a quaternary ammonium base, a copolymer of the mordant monomer and another monomer (referred to hereinafter as "non-mordant monomer"), or a polycondensate of the mordant monomer and a non-mordant monomer. These polymer mordants can be used in the form of a water-soluble polymer or water-dispersible latex particles.

Examples of the monomer (mordant monomer) include trimethyl-p-vinylbenzyl ammonium chloride, trimethyl-m-vinylbenzyl ammonium chloride, triethyl-p-vinylbenzyl ammonium chloride, triethyl-m-vinylbenzyl ammonium chloride, N,N-dimethyl-N-ethyl-N-p-vinylbenzyl ammonium chloride, N,N-diethyl-N-methyl-N-p-vinylbenzyl ammonium chloride, N,N-dimethyl-N-n-propyl-N-p-vinylbenzyl ammonium chloride, N,N-dimethyl-N-n-octyl-N-p-vinylbenzyl ammonium chloride, N,N-dimethyl-N-benzyl-N-p-vinylbenzyl ammonium chloride, N,N-diethyl-N-benzyl-N-p-vinylbenzyl ammonium chloride, N,N-dimethyl-N-(4-methyl)benzyl-N-p-vinylbenzyl ammonium chloride, N,N-dimethyl-N-phenyl-N-p-vinylbenzyl ammonium chloride, trimethyl-p-vinylbenzyl ammonium bromide, trimethyl-m-vinylbenzyl ammonium bromide, trimethyl-p-vinylbenzyl ammonium sulfonate, trimethyl-m-vinylbenzyl ammonium sulfonate, trimethyl-p-vinylbenzyl ammonium acetate, trimethyl-m-vinylbenzyl ammonium acetate, N,N,N-triethyl-N-2-(4-vinylphenyl)ethyl ammonium chloride, N,N,N-triethyl-N-2-(3-vinylphenyl)ethyl ammonium chloride, N,N-diethyl-N-methyl-N-2-(4-vinylphenyl)ethyl ammonium chloride, N,N-diethyl-N-methyl-N-2-(4-vinylphenyl)ethyl ammonium acetate, and a quaternary product obtained by a reaction between methyl chloride, ethyl chloride, methyl bromide, ethyl bromide, methyl iodide, or ethyl iodide and N,N-dimethylaminoethyl (meth)acrylate, N,N-diethylaminoethyl (meth)acrylate, N,N-dimethylamonopropyl (meth)acrylate, N,N-diethylaminopropyl (meth)acrylate, N,N-dimethylaminoethyl (meth)acrylamide, N,N-diethylamionoethyl (meth)acrylamide, N,N-dimethylaminopropyl (meth)acrylamide, or N,N-diethylaminopropyl (meth)acrylamide, as well as their sulfonates, alkyl sulfonates, acetates or alkyl carboxylates obtained by changing the anion thereof.

Specific examples of the mordant include trimethyl-2-(methacryloyloxy)ethyl ammonium chloride, triethyl-2-(methacryloyloxy)ethyl ammonium chloride, trimethyl-2-(acryloyloxy)ethyl ammonium chloride, triethyl-2-(acryloyloxy)ethyl ammonium chloride, trimethyl-3-(methacryloyloxy)propyl ammonium chloride, triethyl-3-(methacryloyloxy)propyl ammonium chloride, trimethyl-2-(methacryloylamino)ethyl ammonium chloride, triethyl-2-(methacryloylamino)ethyl ammonium chloride, trimethyl-2-(acryloylamino)ethyl ammonium chloride, triethyl-2-(acryloylamino)ethyl ammonium chloride, trimethyl-3-(methacryloylamino)propyl ammonium chloride, triethyl-3-(methacryloylamino)propyl ammonium chloride, trimethyl-3-(acryloylamino)propyl ammonium chloride, triethyl-3-(acryloylamino)propyl ammonium chloride, N,N-dimethyl-N-ethyl-2-(methacryloyloxy)ethyl ammonium chloride, N,N-diethyl-N-methyl-2-(methacryloyloxy)ethyl ammonium chloride, N,N-dimethyl-N-ethyl-3-(acryloyloxylamino)propyl ammonium chloride, trimethyl-2-(methacryloyloxy)ethyl ammonium bromide, trimethyl-3-(acryloyloxylamino)propyl ammonium bromide, trimethyl-2-(methacryloyloxy)ethyl ammonium sulfonate, trimethyl-3-(acryloylamino)propyl ammonium acetate. Other copolymerizable monomers such as N-vinylimidazole, N-vinyl-2-methylimidazole, and the like can also be mentioned.

The non-mordant monomer refers to a monomer not containing a basic or cationic moiety such as a primary to tertiary amino group, a salt thereof, and a quaternary ammonium base and not interacting or substantially not interacting with a dye in an ink jet ink.

Examples of the non-mordant monomer includes, for example, alkyl (meth)acrylates; cycloalkyl (meth)acrylates such as cyclohexyl (meth)acrylate; aryl (meth)acrylates such as phenyl (meth)acrylate; aralkyl esters such as benzyl (meth)acrylate; aromatic vinyls such as styrene, vinyl toluene and α-methyl styrene; vinyl esters such as vinyl acetate, vinyl propionate and vinyl versatate; allyl esters such as allyl acetate; halogen-containing monomers such as vinylidene chloride and vinyl chloride; vinyl cyanides such as (meth)acrylonitrile; and olefins such as ethylene and propylene.

The alkyl (meth)acrylates are preferably alkyl (meth)acrylates whose alkyl moiety contains 1 to 18 carbon atoms, such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate and stearyl (meth)acrylate. In particular, methyl acrylate, ethyl acrylate, methyl methacrylate, ethyl methacrylate and hydroxyethyl methacrylate are preferable. A single kind of non-mordant monomer or multiple kinds of non-mordant monomers can be used.

Other preferable examples of the polymer mordant include polydiallyldimethyl ammonium chloride, polymethacryloyloxyethyl-β-hydroxyethyldimethyl ammonium chloride, polyethylenimine, polyallylamine, polyallylamine hydrochloride, polyamide-polyamine resin, cationized starch, dicyandiamide-formalin condensates, dimethyl-2-hydroxypropyl ammonium salt condensates, polyamidine, and polyvinyl amine.

The molecular weight of the polymer mordant is preferably 1000 to 200000, more preferably 3000 to 60000, in terms of weight-average molecular weight. When the molecular weight is in the range of 1000 to 200000, sufficient water resistance is secured, and the deterioration of handling properties caused by high viscosity can be prevented.

Preferable examples of the cationic non-polymer mordant include water-soluble metal salts such as aluminum sulfate, aluminum chloride, polyaluminum chloride and magnesium chloride.

### (Other components)

The colorant receiving layer may contain the following ingredients in accordance with the necessity. For the purpose of preventing deterioration of the colorant, anti-fading agents such as radiation absorbers, antioxidants and singlet oxygen quenchers may be contained. Examples of the radiation absorbers include cinnamic acid derivatives, benzophenone derivatives and benzotriazolyl phenol derivatives. For example, butyl α-cyano-phenylcinnamate, o-benzotriazole phenol, o-benzotriazole-p-chlorophenol, o-benzotriazole-2,4-di-t-butylphenol and o-benzotriazole-2,4-di-t-octylphenol can be mentioned. Hindered phenol compounds can also be used as radiation absorbers, and specifically phenol derivatives substituted by branched alkyl groups at the 2- and/or 6-positions are preferable.

Benzotriazole-based radiation absorbers, salicylic acid-based radiation absorbers, cyanoacrylate-based radiation absorbers and oxalic acid anilide based radiation absorbers can also be used. These compounds are described in for example JP-A Nos. 47-10537, 58-111942, 58-212844, 59-19945, 59-46646, 59-109055, 63-53544, Japanese Patent Application Publication (JP-B) Nos. 36-10466, 42-26187, 48-30492, 48-31255, 48-41572, 48-54965, 50-10726, USP Nos. 2,719,086, 3,707,375, 3,754,919 and 4,220,711.

Fluorescent brighteners can also be used as the radiation absorber, and for example, coumarin fluorescent brighteners can be mentioned. Specifically, the fluorescent brighteners are described, for example, in JP-B Nos. 45-4699 and 54-5324.

Examples of the antioxidants include the antioxidants described in European Patent Laid-Open Nos. 223739, 309401, 309402, 310551, 310552 and 459416, German Patent Laid-Open No. 3435443, JP-A Nos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 66-88381, 63-113536, 63-163351, 63-203372, 63-224989, 63-251282, 63-267594, 63-182484, 1-239282, 2-262654, 2-71262, 3-121449, 4-291685, 4-291684, 5-61166, 5-119449, 5-188687, 5-188686, 5-110490, 5-1108437, 5-170361, JP-B Nos. 48-43295, 48-33212, USP Nos. 4814262 and 4980275.

Specific examples of the antioxidant include 6-ethoxy-1-phenyl-2,2,4-trimethyl-1,2-dihydroquinoline, 6-ethoxy-1-octyl-2,2,4-trimethyl-1,2-dihydroquinoline, 6-ehtoxy-1-phenyl-2,2,4-trimethyl-1,2,3,4-tetrahydroquinoline, 6-ethoxy-1-octyl-2,2,4-trimethyl-1,2,3,4-tetrahydroquinoline, nickel cyclohexanoate, 2,2-bis(4-hydroxyphenyl)propane, 1,1-bis(4-hydroxyphenyl)-2-ethylhexane, 2-methyl-4-methoxy-diphenylamine and 1-methyl-2-phenylindole.

A single kind of anti-fading agent or multiple kinds of anti-fading agents may be used. The anti-fading agent may be rendered water-soluble or be dispersed or emulsified, or may be contained in microcapsules. The amount of the anti-fading agent added is preferably 0.01 to 10% by mass based on the amount of the coating solution for the colorant receiving layer.

For the purpose of improving the dispersing quality of the inorganic colorant fine particles, various inorganic salts or pH regulating agents such as acids or alkalis may be contained. Metal oxide fine particles having electron conductivity may be contained for the purpose of inhibiting surface frictional electrification and peeling electrification, and various matting agents may also be contained for the purpose of reducing surface frictional properties.

As described above, the mordant is introduced into the colorant receiving layer preferably in the step of applying the crosslinking agent solution. That is, the colorant receiving layer is formed preferably by a method (wet-on-wet [WOW] method) in which a coating solution (coating solution for the colorant receiving layer) containing the compound represented by the general formula (1) and/or the compound represented by the general formula (2), the fine particles, and the polyvinyl alcohol is applied as a first solution, and while the coating solution is applied or before a coating formed by the application, which is drying, shows a falling rate of drying, a solution (crosslinking agent solution) containing the boron compound and the mordant is applied as a second solution onto the coating, and then the coating on which the second solution has been applied is cured by crosslinking. In this method, the coating solution for the colorant receiving layer is alkaline in the range of pH 8.0 to 10.0.

Alternatively, the colorant receiving layer can be obtained by simultaneously applying the coating solution for the colorant receiving layer and the crosslinking agent solution onto a substrate and then curing the solutions, wherein at the application, a barrier solution made of a material not reacting with the crosslinking agent is sandwiched between the coating solution for the colorant receiving layer and the crosslinking agent solution and the mordant being contained in at least one of the crosslinking agent solution and the barrier layer.

As described above, the crosslinking agent (boron compound) and the mordant are simultaneously applied in the invention, whereby the water resistance of the colorant receiving layer can be improved. That is, if the mordant is added to the coating solution for the colorant receiving layer, the cationic mordant may be aggregated with the gas phase process silica having anionic charge on the surface thereof, however if the mordant-containing solution and the coating solution for the colorant receiving layer are prepared independently and applied separately, the mordant is not aggregated with the gas phase process silica, and the mordant can be selected from a broader range of mordants.

In the invention, the coating solution for the colorant receiving layer containing at least the compound represented by the general formula (1) and/or the compound represented by the formula (2), the gas phase process silica and the polyvinyl alcohol can be prepared for example in the following manner. That is, the coating solution for the colorant receiving layer can be obtained by adding the gas phase silica to water (for example, 10 to 20% by mass), then dispersing the silica for 20 minutes (preferably 10 to 30 minutes) under the condition of high-speed revolution for example at 10000 rpm (preferably 5000 to 20000 rpm) with a high-speed rotating wet-system colloid mill (for example, Clear Mix manufactured by M technique Co., Ltd.), adding an aqueous solution of polyvinyl alcohol thereto (in such an amount that PVA is about 1/3 by weight relative to the gas phase process silica), adding the compound represented by the general formula (1) and/or the compound represented by the general formula (2) thereto and dispersing the mixture under the same rotational condition as described above. The resulting coating solution is a uniform sol, and can be applied onto a substrate by a coating method described below to form a porous colorant receiving layer having a three-dimensional network structure. The method for dispersing treatment can make use of various dispersing machines known in the art, such as a high-speed rotation dispersing machine, a medium dispersing machine (ball mill, sand mill etc.), a ultrasonic dispersing machine, a colloid mill dispersing machine and a high-pressure dispersing machine, among which the colloid mill dispersing machine or the high-pressure dispersing machine can be preferably used in the present invention from the viewpoint of efficiently dispersing formed coarse particles.

In accordance with necessary, a surfactant, a pH regulating agent, an antistatic agent, or the like can also be added to the colorant-receiving layer coating solution.

The first solution can be applied by contact coating such as bar coating, roll coating, blade coating, screen coating and pad coating or by non-contact coating such as spray coating, spin coating, curtain coating and dip coating.

The second solution can be applied by one of the methods that can be employed for applying the first solution, and in particular the method of applying the crosslinking agent solution before the applied coating shows a falling rate of drying includes (1) a method of further applying the crosslinking agent solution onto the coating, (2) a method of spraying, for example by using a spray, and (3) a method of dipping a substrate having the coating formed thereon into the crosslinking agent solution.

The amount of the crosslinking agent solution containing at least the boron compound and the mordant, which is applied onto the colorant receiving layer, is generally 0.01 to 10 g/m², preferably 0.05 to 5 g/m², in terms of the weight of the boron compound.

When spray coating is used, coating is conducted at a pressure of preferably 1.013 to 2026 hPa, more preferably 50.65 to 1013 hPa, still more preferably 101.3 to 506.5 hPa. The spray is spread at an angle of preferably 1 to 120°, more preferably 10 to 60°, still more preferably 20 to 50°. The diameter of the droplet is preferably 0.1 to 1000 µm, more preferably 1 to 500 µm, still more preferably 10 to 100 µm. The distance from the work (information medium) is preferably 1 to 1000 mm, more preferably 10 to 200 mm, still more preferably 30 to 100 mm. The temperature is preferably 10 to 40°C, more preferably 15 to 35°C, still more preferably 20 to 30°C. The humidity is preferably 5 to 70% RH, more preferably 10 to 40% RH, still more preferably 20 to 50% RH.

When spin coating is employed, the viscosity of the coating solution is preferably 0.1 to 10000 mPa·s, more preferably 1 to 6000 mPa·s, still more preferably 10 to 3000 mPa·s. To secure thickness, the viscosity of the first solution (coating solution for the colorant receiving layer) is preferably 50 to 10000 mPa·s, more preferably 100 to 6000 mPa·s, still more preferably 200 to 3000 mPa·s. To secure the uniformity of the coating, the viscosity of the second solution (crosslinking agent solution) is preferably 0.1 to 1000 mPa·s, more preferably 1 to 500 mPa·s, still more preferably 2 to 300 mPa·s. At the time of dispensing, the number of revolutions is preferably 10 to 1000 rpm, more preferably 50 to 600 rpm, still more preferably 100 to 400 rpm. At the time of shaking the coating solution off by rotation, the number of revolutions is increased stepwise or continuously to a rate of preferably 100 to 10000 rpm, more preferably 200 to 5000 rpm, still more preferably 300 to 3000 rpm. The length of the nozzle used is preferably 1 to 100 mm, more preferably 5 to 50 mm, still more preferably 10 to 30 mm. The inner diameter of the nozzle is preferably 0.1 to 5 mm, more preferably 0.3 to 3 mm, still more preferably 0.5 to 2 mm. The wall thickness of the nozzle is preferably 0.1 to 1 mm, more preferably 0.2 to 0.5 mm. The nozzle may be arranged aslant along a stream of the coating solution. The distance from the work is preferably 0.5 to 100 mm, more preferably 1 to 50 mm, still more preferably 2 to 20 mm. The temperature is preferably 10 to 40°C, more preferably 15 to 35°C, still more preferably 20 to 30°C. The humidity is preferably 5 to 70% RH, more preferably 10 to 40% RH, still more preferably 20 to 50% RH.

After the coating solution for the colorant receiving layer is applied, the crosslinking solution is applied onto the resulting coating layer. In this case, the crosslinking solution may be applied before the coating layer after application shows a falling rate of drying. That is, after the coating solution for the colorant receiving layer is applied, the coating layer while showing a constant rate of drying is allowed to incorporate the boron compound and the mordant, whereby the colorant receiving layer can be preferably produced.

The phrase "before the coating layer shows a falling rate of drying" refers to a period of a few minutes just after application of the coating solution for the colorant receiving layer, and during this period, the content of the solvent in the coating layer after application is decreased in proportion to elapsed time. The time during which the constant rate of drying is kept is described in *Kagaku Kougaku Binran* (Handbook of Chemical Engineering) pp.707-712, published by Maruzen Co., Ltd. in October 25, 1980.

As described above, the applied coating solution for the colorant receiving layer is dried until the coating layer shows a falling rate of drying, and the drying conditions are described in more detail.

The colorant receiving layer may be dried by any drying means such as air drying, hot-air drying, infrared/far infrared drying, high-frequency drying and oven drying.

In the case of air drying, the drying time for the first solution (coating solution for the colorant-receiving solution) is preferably 0.1 to 10000 seconds, more preferably 1 to 1000 seconds, still more preferably 10 to 500 seconds. The drying time for the second solution (crosslinking agent solution) is preferably 1 to 10000 minutes, more preferably 5 to 1000 minutes, still more preferably 10 to 200 minutes. The drying temperature is preferably 0 to 40°C, more preferably 10 to 35°C, still more preferably 20 to 30°C. The drying humidity is preferably 10 to 70% RH, more preferably 20 to 60% RH, still more preferably 30 to 50% RH.

In the case of hot-air drying, the drying time for the first solution is preferably 0.1 to 5000 seconds, more preferably 1 to 1000 seconds, still more preferably 10 to 500 seconds. The drying temperature is preferably 40 to 200°C, more preferably 60 to 150°C, still more preferably 80 to 130°C. The drying humidity is preferably 0.01 to 50% RH, more preferably 0.1 to 30% RH, still more preferably 1 to 20% RH.

In the case of infrared/far infrared drying, the drying time for the first solution is preferably 0.1 to 1000 seconds, more preferably 1 to 500 seconds, still more preferably 10 to 300 seconds. The drying time for the second solution is preferably 1 to 2000 seconds, more preferably 10 to 1000 seconds, still more preferably 30 to 500 seconds. The power output is preferably 10 to 2000 W, more preferably 50 to 1500 W, still more preferably 100 to 1000 W.

The drying conditions in high-frequency drying are the same as in infrared/far infrared drying.

In the case of oven drying, the drying time for the first solution is preferably 0.1 to 1000 seconds, more preferably 1 to 500 seconds, still more preferably 10 to 300 seconds. The drying time for the second solution is preferably 1 to 2000 seconds, more preferably 10 to 1000 seconds, still more preferably 30 to 500 seconds.

The coating solution for the crosslinking agent may be applied together with the coating solution for the colorant receiving layer. In this case, the coating solution for the colorant receiving layer and the crosslinking agent solution are simultaneously applied (multi-layer coating) onto a substrate in such a manner that the coating solution for the colorant receiving layer contacts with the substrate, then the applied solutions are dried and cured to give the colorant receiving layer.

This simultaneous application (multi-layer coating) can be carried out by a coating method using e.g. an extrusion die coater or a curtain flow coater. The coating layer formed after the simultaneous application is dried by heating the layer generally at 40 to 150°C for 0.5 to 10 minutes, preferably at 40 to 100°C for 0.5 to 5 minutes. For example, when borax or boric acid is used as the boron compound contained in the crosslinking agent solution, the coating layer is heated preferably at 60 to 100°C for 5 to 20 minutes.

When the simultaneous application (multi-layer coating) is carried out by using e.g. an extrusion die coater, the two simultaneously discharged coating solutions form a double layer in the vicinity of a discharge orifice of the extrusion die coater, that is, before reaching a substrate, and then the double layer is applied onto the substrate. Before reaching the substrate, the two coating solutions in the double layer undergo crosslinking reaction easily in the interface between the two solutions during transfer to the substrate, and thus the discharged two solutions are mixed and thickened easily in the vicinity of the discharge orifice of the extrusion die coater, to cause a hindrance sometimes in the coating operation. In the simultaneous application described above, therefore, a triple layer is preferably applied by simultaneously applying the coating solution for the colorant receiving layer and the boron compound- and mordant-containing crosslinking agent solution, together with a barrier layer coating solution (intermediate layer coating solution) which is sandwiched between the two solutions and made of a material not reacting with the crosslinking agent.

The barrier layer coating solution can be selected without particular limitation insofar as it can form a liquid coating without reacting with the boron compound. For example, an aqueous solution containing a very small amount of a water-soluble resin which does not react with the boron compound, or water, can be used. Examples of the water-soluble resin, which is used for the purpose of thickening or the like in consideration of coating properties, includes polymers such as hydroxypropylmethyl cellulose, methyl cellulose, hydroxyethylmethyl cellulose, polyvinyl pyrrolidone and gelatin. The barrier layer may also contain the mordant.

The colorant receiving layer in the invention may be formed by a method in which a coating solution prepared by adding a solution (first solution) containing the compound represented by the general formula (1) and/or the compound represented by the general formula (2), the polyvinyl alcohol and the boron compound to an aqueous dispersion containing the fine particles and a dispersant and then re-dispersing the mixture, is applied onto the surface of a substrate, and while the coating solution is applied or before a drying coating formed by application shows a falling rate of drying, a solution (second solution) containing the boron compound and the mordant is applied onto the coating, followed by curing the coating to form the colorant receiving layer. In the method described above, the first solution forming the colorant receiving layer is acidic in the range of pH 2.5 to 4.0. The method described above is preferably used to improve gloss and print density.

As the dispersant, a cationic polymer can be used. Preferable examples of the cationic polymer include the above-enumerated mordants such as a homopolymer of a monomer having a primary to tertiary amino group, a homopolymer of a monomer having a salt of a primary to tertiary amino group, a homopolymer of a monomer having a quaternary ammonium base, a copolymer of such monomer and another monomer, or a polycondensate of such monomer and another monomer. These dispersants are used preferably in the form of water-soluble polymers.

The molecular weight of the dispersant is preferably 1000 to 200000, more preferably 3000 to 60000, in terms of weight-average molecular weight. If the molecular weight is smaller than 1000, dispersing quality may be insufficient, while if the molecular weight is higher than 200000, the viscosity of the aqueous dispersion may be increased. The amount of the dispersant added to the gas phase process silica is preferably 1 to 30%, more preferably 3 to 20%. An amount outside of the above range is not preferable because if the amount is less than 1%, dispersing quality may be insufficient, while if it is larger than 30%, color density may be low upon printing on the colorant receiving layer.

An aqueous dispersion comprising the gas phase process silica and the dispersant may be prepared by firstly preparing an aqueous dispersion of the gas phase process silica and then adding the aqueous dispersion to an aqueous solution of the dispersant or by adding an aqueous solution of the dispersant to an aqueous dispersion of the gas phase process silica, or by simultaneously mixing the two. Alternatively, the gas phase process silica in a powdery form in place of an aqueous dispersion of the gas phase process silica may be added to an aqueous solution of the dispersant. After the gas phase process silica is mixed with the dispersant, the mixture is finely divided with a dispersing machine, whereby an aqueous dispersion having an average particle diameter of 50 to 300 nm can be obtained. As the dispersing machine used in preparing the aqueous dispersion, use can be made of various dispersing machines known in the art, such as a high-speed rotation dispersing machine, a medium stirring dispersing machine (such as ball mill and sand mill), an ultrasonic dispersing machine, a colloid mill dispersing machine and a high-pressure dispersing machine, among which the colloid mill dispersing machine or the high-pressure dispersing machine is preferably used from the viewpoint of efficiently dispersing coarse particles formed.

As the solvent in each step, water, an organic solvent or a mixed solvent thereof can be used. The organic solvent which can be used in coating includes alcohols such as methanol, ethanol, n-propanol, i-propanol and methoxypropanol, ketones such as acetone and methyl ethyl ketone, tetrahydrofuran, acetonitrile, ethyl acetate and toluene.

After the colorant receiving layer is formed on the substrate, the colorant receiving layer can be subjected to calendering through nip portion between rolls under heating and pressure with a supercalender, a gloss calender or the like to improve surface smoothness, gloss, transparency and coating strength. However, calendering can cause a reduction in porosity (that is, a reduction in ink absorptivity), and should thus be conducted under predetermined conditions where porosity is scarcely reduced.

The temperature of the rolls in calendering is preferably 30 to 150°C, more preferably 40 to 100°C. The linear pressure between the rolls in calendering is preferably 50 to 400 kg/cm, more preferably 100 to 200 kg/cm.

The diameter of the pore in the colorant receiving layer is preferably 0.005 to 0.030 µm, more preferably 0.01 to 0.025 µm, in terms of median diameter. The porosity and pore median diameter can be measured by a mercury porosimeter (trade name: Pore Sizer 9320-PC2 manufactured by Shimadzu Corporation).

Preferably, the colorant receiving layer is excellent in transparency. The transparency of the colorant receiving layer formed on a transparent film substrate is preferably 30% or less, more preferably 20% or less, in terms of haze value. The haze value can be measured with a haze meter (HGM-2DP manufactured by Suga Test Instrument Co., Ltd.).

A surface layer may be formed on the colorant receiving layer. By forming the surface layer, the surface strength of the resulting information medium can be improved and the shelf stability of prints can be improved. However, the surface layer should have properties to receive an ink and to allow an ink to pass through the surface layer rapidly.

An intermediate layer may be provided between the colorant receiving layer and the undercoat layer. By providing the intermediate layer, the amount of an ink received can be increased, color density upon printing can be improved, and image qualities can be improved.

When the color of the undercoat layer is white, another intermediate layer may be provided between the undercoat layer and the substrate. By providing the intermediate layer, the contact characteristics of the primer coat to the substrate is improved to prevent the information medium from being warped as a whole.

The information medium of the invention may be a magnetic medium, an optical medium and a semiconductor medium, and may be in the form of a disk, a tape or a cartridge. The cartridge is preferably removable. The information medium is particularly preferably an optical recording medium in the form of a disk (optical disk).

The lower limit of the thickness of the information medium in the invention is preferably 0.3 mm, more preferably 0.5 mm, still more preferably 0.7 mm. The upper limit is preferably 100 mm, more preferably 20 mm, still more preferably 5 mm. When the information medium is too thin, it may have defects upon bending. When the information disk is too thick, it may be inferior in removabilility.

The diameter of the inner periphery of the colorant receiving layer is larger by preferably 0.1 mm or more, more preferably 0.5 mm or more, still more preferably 1 mm or more, further more preferably 2 mm or more, than the diameter of the inner periphery of the substrate (diameter of the central hole).

When the information medium is an optical information recording medium such as CD or DVD, the shortest distance between the outer periphery of the colorant receiving layer and the outer periphery of the substrate is preferably 0.1 mm or more, more preferably 0.5 mm or more, still more preferably 1 mm or more, further more preferably 2 mm or more, most preferably 3 mm or more.

In consideration of practical usability, the shortest distance between the outer periphery of the colorant receiving layer and the outer periphery of the substrate is preferably 20 mm or less, more preferably 10 mm or less, still more preferably 5 mm or less.

Each of the internal and external periphery may not be circular. The information medium can have various design forms. The upper and lower limits defined above stipulate the most protruded portion.

When the information medium is an optical information recording medium, it can also be an optical disk for recording and reproduction with a violet laser.

The medium for recording with a violet laser may be either an attached medium such as DVD or a medium having a recording layer and a laser light-receiving cover layer formed on a 1.1 mm substrate wherein a laser ray comes from the cover layer side.

The undercoat layer and the colorant receiving layer are formed usually on a side opposite to the side of a substrate upon which a laser light will be incident, however the colorant receiving layer can be formed on an area of the side upon a laser light will be incident insofar as the area is not an area upon which a laser light will be incident.

The information medium of the invention may be a medium of ROM type, rewritable type or write once type, among which the write once type is particularly preferable.

For example, the optical information recording medium having a recording layer is constituted such that the recording layer, an optical reflective layer and a protective layer are provided in this order on a substrate, or constituted such that at least the recording layer, an optical reflective layer, an adhesive layer and a protective substrate (dummy substrate) are provided in this order on a substrate.

Hereinafter, the substrate and the respective layers used in the invention are described in more detail. The layer structure, materials and the like are described for illustrative purposes only and are not intended to limit the invention.

### (Substrate)

As the substrate, various materials used as substrate materials in conventional optical information recording mediums can be arbitrarily selected and used.

Specific examples of the substrate material include glass; acrylic resins such as polycarbonate and polymethyl methacrylate; vinyl chloride resins such as polyvinyl chloride and vinyl chloride copolymers; epoxy resins; amorphous polyolefins; polyesters; and metals such as aluminum. In accordance with necessity, multiple kinds of substrate materials can be used simultaneously.

Among the materials described above, amorphous polyolefins and polycarbonates are preferable in respect of moisture resistance, dimensional stability and low price, and polycarbonate is particularly preferable. The thickness of the substrate is preferably 0.5 to 1.2 mm, more preferably 0.6 to 1.1 mm.

The substrate is provided with a tracking guide groove or unevenness (pre-groove) for indicating information such as address signals.

The track pitch of a pre-groove on DVD-R or DVD-RW is preferably in the range of 300 to 900 nm, more preferably 350 to 850 nm, still more preferably 400 to 800 nm.

If the track pitch is less than 300 nm, accurate formation of the pre-groove is difficult, and there arises a problem of cross talk. If the track pitch exceeds 900 nm, there arises a problem of low recording density.

The depth of the pre-groove (groove depth) is preferably in the range of 100 to 160 nm, more preferably 120 to 150 nm, still more preferably 130 to 140 nm.

If the depth is less than 100 nm, recording modulation cannot be sufficiently achieved, while if it exceeds 160 nm, reflectance may be significantly lowered.

The half-width of the pre-groove is preferably in the range of 200 to 400 nm, more preferably 230 to 380 nm, still more preferably 250 to 350 nm.

If the half-width of the pre-groove is less than 200 nm, the groove may not sufficiently be transferred during molding, or the error rate in recording may be raised, while if it is exceeds 400 nm, a pit formed in recording may be broader thus causing cross talk or failing to achieve sufficient modulation.

The track pitch of the pre-groove on CD-R or CD-RW is preferably in the range of 1.2 to 2.0 µm, more preferably 1.4 to 1.8 µm, still more preferably 1.55 to 1.65 µm.

The depth of the pre-groove (groove depth) is preferably in the range of 100 to 250 nm, more preferably 150 to 230 nm, still more preferably 170 to 210 nm.

The half-width of the pre-groove is preferably in the range of 400 to 650 nm, more preferably 480 to 600 nm, still more preferably 500 to 580 nm.

The critical meaning of the above-defined numerical ranges of the pre-groove is the same as the critical meanings in the case of DVD-R or DVD-RW described above.

### (Recording layer)

The recording layer in CD-R or DVD-R is formed by dissolving a colorant as the recording material, together with a binder etc., in a suitable solvent to prepare a coating solution, then applying this coating solution by spin coating onto that surface of a substrate on which a pre-groove has been formed, to form a coating thereon and drying the coating.

The temperature in spin coating is preferably 23°C or higher, more preferably 25°C or higher. There is no particular upper limit of the temperature, but the temperature is preferably 35°C, and has to be lower than the flash point of the solvent used.

When the temperature is less than 23°C, a longer time is required for drying the solvent. Accordingly, there may be cases where the desired thickness of the colorant (thickness of the recording layer) cannot be attained, or the time for drying the coating is prolonged to reduce productivity.

Examples of the colorant include a cyanine colorant, an oxonol colorant, a metal complex colorant, an azo colorant and a phthalocyanine colorant, among which the phthalocyanine colorant is preferable.

Further, colorants described in JP-A Nos. 4-74690, 8-127174, 11-53758, 11-334204, 11-334205, 11-334206, 11-334207, 2000-43423, 2000-108513 and 2000-158818 can also be preferably used.

Examples of the solvent in the coating solution include esters such as butyl acetate, ethyl lactate and 2-methoxyethyl acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol, n-butanol diacetone alcohol; fluorine-based solvents such as 2,2,3,3-tetrafluoropropanol; and glycol ethers such as ethylene glycol monomethyl ether, ethylene glycol monoethyl ether and propylene glycol monomethyl ether.

In consideration of the solubility of the recording material used, the solvents can be used singly or in combination. The coating solution can further contain various additives such as an antioxidant, a radiation absorber, a plasticizer and a lubricant, depending on the object.

When a binder is used, examples of the binder include naturally occurring organic polymers such as gelatin, cellulose derivatives, dextran, rosin and rubber. Examples of the binder also include synthetic organic polymers such as initial condensates of: hydrocarbon resins such as polyethylene, polypropylene, polystyrene and polyisobutylene; vinyl resins such as polyvinyl chloride, polyvinylidene chloride and a polyvinyl chloride/polyvinyl acetate copolymer; acrylic resins such as poly(methyl acrylate) and poly(methyl methacrylate); and heat-curable resins such as polyvinyl alcohol, chlorinated polyethylene, epoxy resin, butyral resin, rubber derivatives, and phenol/formaldehyde resin. When the binder is simultaneously used as a material in the recording layer, the ratio of the amount of binder to the amount of the recording material is usually in the range of 0.01 to 50 by mass, preferably 0.1 to 5 by mass. The concentration of the recording material in the coating solution thus prepared is generally in the range of 0.01 to 10% by mass, more preferably 0.1 to 5% by mass.

As the coating method, the spin coating method is used as described above, and a device and the like used in this method can be ones known in the art.

The recording layer may be a single or double layer, and the thickness of the layer is generally in the range of 20 to 500 nm, preferably 30 to 300 nm, more preferably 50 to 100 nm.

The recording layer can contain various anti-fading agents to improve the light resistance of the recording layer.

As the anti-fading agent, a singlet oxygen quencher is generally used. As the singlet oxygen quencher, ones described in documents such as known patent specifications can be utilized.

Examples of such singlet oxygen quenchers include singlet oxygen quenchers described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, 4-25492, JP-B Nos. 1-38680, 6-26028 and German Patent No. 350399, and *Nihon Kagakukaishi* (the Journal of Japanese Chemical Society), October, (1992), p.1141.

The amount of the anti-fading agent such as singlet oxygen quencher is usually in the range of 0.1 to 50% by mass, preferably 0.5 to 45% by mass, more preferably 3 to 40% by mass, still more preferably 5 to 25% by mass, based on the amount of the colorant.

The recording layer in CD-RW or DVD-RW is composed preferably of a phase-changeable optical recording material comprising Ag, Al, Te and Sb which recording material can take at least two forms of crystalline form and amorphous form. The recording layer can be formed by known methods.

In accordance with necessity, a known dielectric layer is formed on the recording layer.

### (Light reflective layer)

After the recording layer is formed, a light reflective material is deposited on the recording layer by vapor-deposition, sputtering or ion-plating to form a light reflective layer. In formation of the light reflective layer, a mask can be usually used to regulate the area of the light reflective layer formed.

In the light reflective layer, a light reflective material of high reflectance for laser lights is used. The reflectance is preferably 70% or higher.

The light reflective material of high reflectance includes metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel. These light reflective materials may be used alone, or a combination of two or more thereof or an alloy thereof may be used. Among these materials, Cr, Ni, Pt, Cu, Ag, Au, Al and stainless steel are preferable. Au, Ag, Al or alloys thereof are particularly preferable, and Au, Ag or alloys thereof are most preferable.

The thickness of the light reflective layer is generally in the range of 10 to 300 nm, preferably in the range of 50 to 200 nm.

### (Protective layer, protective substrate)

After the light reflective layer is formed, a protective layer is formed on the light reflective layer.

The protective layer is formed by spin coating. By spin coating, the protective layer can be formed without damaging (such as dissolution of the colorant, chemical reaction of the colorant with the material of the protective layer) the recording layer. The number of revolutions in spin coating is preferably 50 to 8000 rpm, more preferably 100 to 5000 rpm, from the viewpoint of formation of a uniform layer and prevention of damage to the recording layer.

When a radiation-curable resin is used in the protective layer, the protective layer is formed by spin coating and then irradiated with radiation which is emitted by an irradiation lamp (metal halide lamp) and comes through the protective layer thereby curing the radiation-curable resin.

To eliminate the uneven thickness of the protective layer to be formed, the protective layer may be left for a predetermined time before the resin is cured.

The protective layer prevents penetration of water and generation of defects. The material constituting the protective layer is preferably a radiation-curable resin such as a UV-curable resin and a visible ray-curable resin, a heat-curable resin, silicon dioxide, or the like, among which a UV-curable resin is preferable. The UV-curable resin is for example a UV-curable resin such as SD-640 manufactured by Dainippon Ink and Chemicals, Incorporated. SD-347 (Dainippon Ink and Chemicals, Incorporated), SD-694 (Dainippon Ink and Chemicals, Incorporated), SKCD1051 (SKC Co., Ltd.), and the like can also be used. The thickness of the protective layer is preferably in the range of 1 to 200 µm, more preferably 50 to 150 µm.

When the protective layer is used in such a layer constitution that the protective layer is used as a laser light path, the protective layer has to have transparency. The term "transparency" refers to such transparency that a layer permit transmission (transmittance: 90 or more) of a recording or regenerating light.

DVD-R or DVD-RW is laminated with an adhesive layer made of a radiation-curable resin or the like in place of the protective layer and with a substrate as a protective substrate (thickness, about 0.6 mm; material, the same as that in the substrate described above).

That is, after the light reflective layer is formed, a radiation-curable resin (such as SD640 manufactured by Dainippon Ink and Chemicals, Incorporated) is applied by spin coating on the light reflective layer so that the thickness of the coating becomes 20 to 60 µm, whereby an adhesive layer is formed. On the adhesive layer thus formed, for example, a polycarbonate substrate (thickness 0.6 mm) as a protective substrate is placed, and the substrate is irradiated with radiation to cure the radiation-curable resin so that the protective substrate adheres to the light reflective layer via the adhesive layer.

In this manner, an optical information recording medium comprising a laminate which includes the recording layer, the light reflective layer, and the protective layer or the protective substrate (dummy substrate) with the adhesive layer underneath, which layers are provided on the substrate, is prepared. The undercoat layer and the colorant receiving layer are formed on the surface of this information medium.

By suitably predetermining the track pitch of a pre-groove formed on a substrate, the material constituting the recording layer, and the like, the optical information recording medium of the invention can also be applied to an optical information recording medium having a narrower track pitch than that of conventional DVD and capable of recording and reproducing information with a laser light (violet laser) having a shorter wavelength than that of conventionally used laser lights.

### EXAMPLES

Hereinafter, the invention is described in more detail by reference to the Examples, but the invention is not limited thereto. In the Examples, the "parts" and "%" refer to "parts by mass" and "% by mass", respectively.

### [Preparation of CD-R type optical information recording medium]

A polycarbonate resin (trade name: PANLIGHT AD5503 manufactured by Teijin Limited) was injected into an extrusion molding machine equipped with a stamper which is prepared so as to form a groove of predetermined shape with a predetermined track pitch, and then molded at a temperature of 115°C to prepare a disk-shaped resin substrate made of the polycarbonate.

The resulting disk-shaped resin substrate had a diameter of 120 mm and a thickness of 1.2 mm with a spiral concave groove (pre-groove) formed on the surface thereof.

The track pitch of the concave groove was 1.6 µm, the width of the groove was 500 nm, and the depth of the groove was 180 nm.

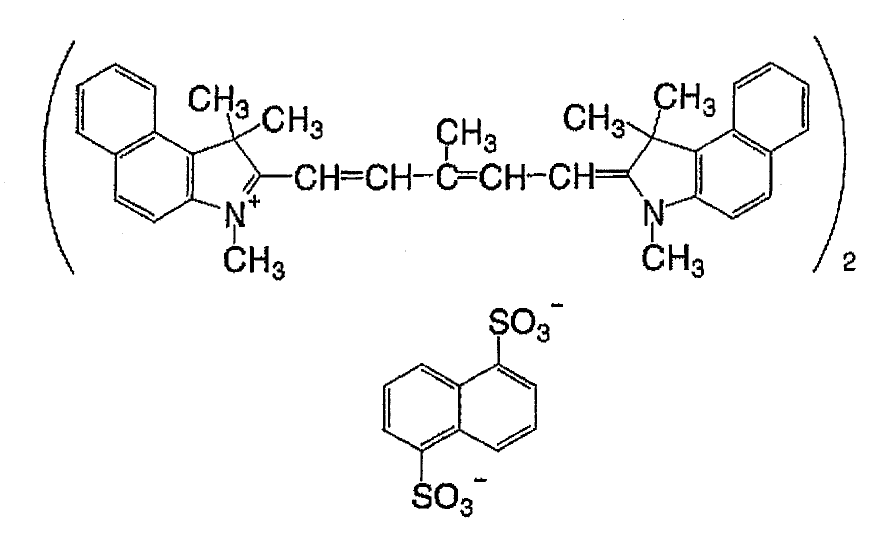

2.5 g of the cyanine colorant represented by the above structural formula was dissolved in 100 ml of 2,2,3,3-tetrafluoropropanol to prepare a recording layer coating solution.

This coating solution was applied by spin coating onto that surface of the disk-shaped polycarbonate substrate on which the pre-groove had been formed, to form a colorant recording layer (thickness: 190 nm in the groove area and 110 nm in the land area).

Then, on the colorant receiving layer, a reflective layer of Ag having a thickness of 120 nm was formed by sputtering with a DC magnetron sputtering device.

Then, the reflective layer was coated with a UV-curable resin (trade name: SD318 manufactured by Dainippon Ink and Chemicals, Incorporated) by spin coating at a varying rate of 300 to 4000 rpm. After coating, the resin was cured with irradiation with UV rays from a high-pressure lamp, to form a protective layer of 5 µm in thickness.

By these steps, a CD-R type information medium (optical information recording medium) consisting of the substrate, the colorant receiving layer, the reflective layer and the protective layer was produced.

### Example 1

An undercoat layer (white layer of 10 µm in thickness) made of a UV curing ink (trade name: SSD F27 manufactured by Dainippon Ink and Chemicals, Incorporated) was formed by screen printing on the protective layer of the prepared optical information recording medium such that the undercoat layer became concentric with the substrate.

The formed undercoat layer had an internal diameter of 38 mm and an external diameter of 117 mm.

Then, a colorant receiving layer was formed on the undercoat layer through the following process.

### -Preparation of a colorant receiving layer coating solution-

(1) fine particles of gas phase process silica were mixed with (2) deionized water and then dispersed at a rate of 10000 rpm for 20 minutes with a high-speed revolution colloid mill (CLEAR MIX manufactured by M technique Co., Ltd.), then (3) polyoxyethylene lauryl ether, (4) ammonia water, (5) 9% aqueous polyvinyl alcohol, and (6) diethylene glycol monobutyl ether were added thereto and dispersed under the same conditions as that recited above, to prepare a colorant receiving layer coating solution A, wherein the respective components are recited in the following composition.

The ratio of the silica fine particles to the water-soluble resin (PB ratio, that is, (1):(5)) was 3.5: 1, and the pH of the colorant receiving layer coating solution A was alkaline at pH 9.5.

### [Composition of the colorant receiving layer coating solution A]

| | |
|---|---|
| (1) Fine particles of gas phase process silica (fine particles of the inorganic colorant) | 9.9 parts |
| (AEROSIL 300 having an average primary particle diameter of 7 nm, manufactured by Aerosil) | |
| (2) Deionized water | 72.6 parts |
| (3) Polyoxyethylene lauryl ether (surfactant) | 7.2 parts |
| (EMULGEN 109P (10%) manufactured by Kao Corporation, with HLB value of 13.6) | |
| (4) 17 g/L aqueous ammonia (pH regulating agent) | 5.3 parts |
| (5) 9% Aqueous polyvinyl alcohol (water-soluble resin) | 31.4 parts |
| (PVA420, saponification degree 81.8%, polymerization degree 2000, manufactured by Kuraray Co., Ltd.) | |
| (6) Diethylene glycol monobutyl ether | 0.6 part |
| (compound represented by the general formula (1)) | |

### -Formation of a colorant receiving layer-

The surface of the undercoat layer in the information medium was subjected to corona discharge treatment, and then an area within 20 mm surrounding the inner periphery of the substrate and an area within 59 mm along the outer periphery of the substrate were covered with masks respectively, and the colorant receiving layer coating solution A was applied by spray coating in an amount of 180 ml/m² onto the undercoat layer and then dried with a hot-air dryer at 80°C (at wind speed of 3 to 8 m/ sec) until the solids content of the coating layer became 20%. During this drying, the coating layer showed a constant rate of drying. Immediately thereafter, the coating layer of the colorant receiving layer coating solution A was coated by spraying with a crosslinking agent solution A having the following composition and then dried at 80°C for 5 minutes. An information medium having the undercoat layer and the colorant receiving layer having the dry film thickness of 30 µm was thus prepared.

In the above process, the information medium was formed such that the internal and external diameters of the colorant receiving layer, which was concentric with the substrate, were 36 mm and 119 mm respectively, and the internal and external peripheries of the undercoat layer were coated respectively with the colorant receiving layer.

### [Composition of the crosslinking agent solution A]

| | |
|---|---|
| ·Boric acid (6%; crosslinking agent) | 25 parts |
| ·(20%) Aqueous solution of PAS-F5000 | 7.15 parts |
| (mordant manufactured by Nittobo) | |
| ·Deionized water | 68.98 parts |
| · Ammonium chloride (surface pH regulating agent) | 0.2 part |
| ·Aqueous ammonia (25%; pH regulating agent) | 1.67 parts |
| ·Polyoxyethylene lauryl ether (surfactant) | 2 parts |

### (EMULGEN 109P (10%), manufactured by Kao Corporation, with HLB value of 13.6,)

### Comparative Example 1

An optical information recording medium having an undercoat layer and a colorant receiving layer was prepared in the same manner as in Example 1 except that the undercoat layer was formed on the protective layer of the prepared optical information recording medium, and the colorant receiving layer having an internal diameter of 40 mm and an external diameter of 115 mm was formed thereon.

An image-forming test was conducted in which an image was formed by an ink jet printer (trade name: PM-970C manufactured by Seiko Epson Corporation) on the whole area of the colorant receiving layer of each of the optical information recording mediums produced in Example 1 and Comparative Example 1. Here, the images printed on the respective optical information recording mediums were the same.

When the images on the two optical information recording mediums are compared with each other, the image on the optical information recording medium of Comparative Example 1 had deeper color in inner and outer peripheral areas, while the image on the optical information recording medium of Example 1 could be printed beautifully without deeper color in inner and outer peripheral areas.

### [Preparation of DVD-R type optical information recording medium]

A polycarbonate substrate (trade name: PANLIGHT AD5503 having a thickness of 0.6 mm, an external diameter of 120 mm and an internal diameter of 15 mm, manufactured by Teijin Limited) having a spiral groove (land) and LPP formed thereon was prepared by injection molding.

The depth, width and pitch of the groove were 140 nm, 310 nm and 740 nm, respectively.

1 g dye in which the following oxonol dyes (A) and (B) had been mixed at a mass ratio of 65:35 was dissolved in 100 ml 2,2,3,3-tetrafluoro-1-propanol, and the resulting recording layer coating solution was applied onto the groove surface of said substrate by spin coating at a varying rate of 300 to 3000 rpm and then dried to form a recording layer.

The thickness of the recording layer, as determined by observing a section of the recording layer under SEM, was 150 nm in the groove area and 110 nm in the land area.

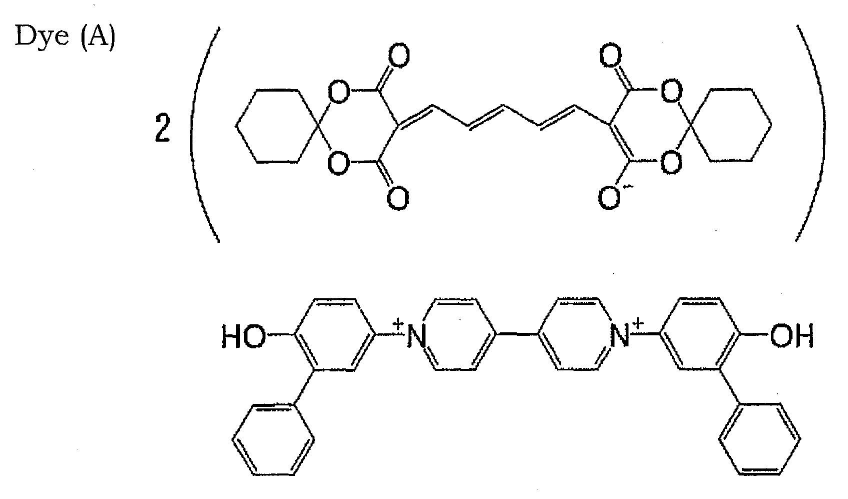

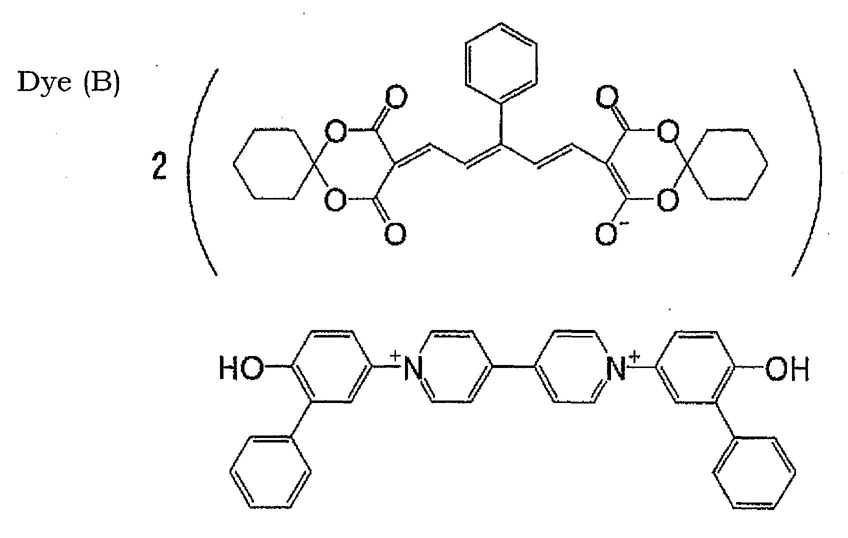

Then, a reflective layer of Ag having a thickness of 150 nm was formed on the recording layer by DC sputtering in an argon atmosphere.

The pressure in the chamber used was 0.5 Pa.

A UV-curable resin (trade name: SD-640 manufactured by Dainippon Ink and Chemicals, Incorporated) was dispensed in a circular form on the reflective layer. Then, a separately prepared disk-shaped protective substrate made of polycarbonate (diameter, 120 mm; thickness, 0.6 mm) was placed on the reflective layer such that the center of the protective substrate coincide with that of the reflective layer, and then revolved at a rate of 5000 rpm for 3 seconds, whereby the UV-curable resin was spread on the whole area while an excess of the UV-curable resin was swished off. When the UV-curable resin was spread over the whole area, the UV-curable resin was cured with irradiation with UV rays from a high-pressure mercury lamp, whereby the substrate having the recording layer and the reflective layer formed thereon was stuck to the disk-shaped protective substrate. The thickness of the laminated layer was 25 µm and the laminated layer included no bubble.

By the above process, a DVD-R type information medium (optical information recording medium) was produced.

An undercoat layer and a colorant receiving layer were formed on the protective substrate in the same manner as in Example 1 to prepare an optical information recording medium having the substrate layer and the colorant receiving layer.

### Comparative Example 2

An optical information recording medium having an undercoat layer and a colorant receiving layer was prepared in the same manner as in Example 2 except that the undercoat layer was formed on the protective layer of the prepared optical information recording medium, and the colorant receiving layer having an internal diameter of 40 mm and an external diameter of 115 mm was formed thereon.

An image-forming test was conducted in which an image was formed by an ink jet printer (trade name: PM-970C manufactured by Seiko Epson Corporation) on the whole area of the colorant receiving layer of each of the optical information recording mediums produced in Example 2 and Comparative Example 2. Here, the images printed on the respective optical information recording mediums were the same.

When the images on the two optical information recording mediums are compared with each other, the image on the optical information recording medium of Comparative Example 2 had deeper color in inner and outer peripheral areas, while the image on the optical information recording medium of Example 2 could be printed beautifully without deeper color in inner and outer peripheral areas.

The information medium of the invention is free of a phenomenon in which color is partially deepened upon formation of an image in the edge of the colorant receiving layer, and can thus produce an image without unevenness.

## Claims

1. An information medium comprising an undercoat layer and a colorant receiving layer in this order on a substrate, wherein at least a part of the periphery of the undercoat layer is coated with the colorant receiving layer.

2. An information medium according to claim 1, wherein at least a part of the outer periphery of the undercoat layer is coated with the colorant receiving layer.

3. An information medium according to claim 1, wherein at least a part of the inner periphery of the undercoat layer is coated with the colorant receiving layer.

4. An information medium according to claim 1, wherein the entire periphery of the undercoat layer is coated with the colorant receiving layer.

5. An information medium according to any one of claims 1-4, wherein the colorant receiving layer comprises fine particles.

6. An information medium according to any one of claims 1-4, wherein at least a part of an image formed on the colorant receiving layer is formed on the colorant receiving layer not having the undercoat layer formed thereunder.

7. An information medium according to any one of claims 1-4, wherein the maximum distance between the undercoat layer and a periphery of the colorant receiving layer is at least 0.1 mm.

8. An information medium according to any one of claims 1-4, wherein a recording layer or a protective layer is formed between the colorant receiving layer and the undercoat layer.
